Europäisches Patentamt

European Patent Office

Office européen des brevets

(11) Publication number: **0 364 133**
**A1**

## EUROPEAN PATENT APPLICATION

(21) Application number: 89309874.9

(22) Date of filing: 28.09.89

(51) Int. Cl.⁵: **E04C 2/26 , B29C 65/48 , B29C 65/02 , B29C 49/24 , B29C 51/16**

(30) Priority: 28.09.88 GB 8822767

(43) Date of publication of application:
**18.04.90 Bulletin 90/16**

(84) Designated Contracting States:
**BE DE ES FR GB IT NL**

(71) Applicant: **YORK TRAILER COMPANY LIMITED**
**Yafforth Road**
**Northallerton North Yorkshire, DL7 8UE(GB)**

(72) Inventor: **Endelin, Claude**
**42 Ter Route de Macon**
**F-71450 Blanzy(FR)**

(74) Representative: **Allen, Oliver John Richard et al**
**Lloyd Wise, Tregear & Co. Norman House**
**105-109 Strand**
**London, WC2R 0AE(GB)**

(54) **Improvements in and relating to refrigerated vehicles.**

(57) A method of forming a conducted panel for use in a refrigerated vehicle or container is described. The method comprises assembling two layers of insulative material (2, 14) which are spaced by a number of dividers (8a, 8b), preferably also formed from insulative material, with adhesive between the parts. An air bag (10) is placed between each adjacent pair of dividers and its interior is vented to the atmosphere. The assembly is placed on a vacuum table (6) covered by a vacuum blanket (18) and a vacuum is applied below the blanket to force the parts into good contact. The pressure differential causes the air bag to expand, thereby preventing collapse of any of the parts. The air bag may also act as the line for the duct or ducts so formed.

Fig.1.

This invention relates to the thermally insulated bodies of refrigerated vehicles such as lorries, vans, trailers and semi-trailers and refrigerated containers used for carrying fresh, chilled or frozen foodstuffs or other goods whose temperature must be controlled and in particular to the provision of ducts for supplying hot or cold air to the load-carrying compartments of such vehicles or containers.

In known refrigerated vehicles, a refrigeration unit is employed to maintain the temperature at that required for the goods being carried. The refrigeration unit normally extracts heat, in order to cool the temperature of the air so that, for example, frozen foodstuffs may be carried. However, it is common for the refrigeration unit also to be arranged so that it is also capable of heating the air when a high compartment temperature is desired, for example, in cold weather when damage to fresh cargo could occur.

In vehicles or containers with a single load-carrying compartment, the refrigeration unit is normally secured to the front end of the body or a false bulkhead is provided in the body near the front bulkhead and the refrigeration unit is positioned between the two. In either case, the air outlet from the refrigeration unit is connected to the compartment by one or more ducts which normally open into the top of the compartment. Often two or more ducts are provided of different lengths so that the temperature can be held constant across the compartment. The air may be returned to the refrigeration unit by ducts contained near or in the floor.

In some multi-compartment vehicles or containers, that is, vehicles or containers where the load-carrying space is divided into a number of compartments by curtains, screens or bulkheads, the refrigeration unit is again provided either externally or in a specially constructed compartment and a plurality of ducts are provided, one leading to (and optionally one returning from) each compartment.

In other known multi-compartmental vehicles, the refrigeration unit has been located in the compartment which is to be kept at the lowest temperature. The compartments are all interconnected by air ducts, which may be in the roof or walls or in the movable bulkheads if these are employed to form the compartments, in which are positioned fans. When it is required to cool another compartment, the air ducts between the compartment containing the refrigeration unit and that compartment are opened and the fans operated to cause cold air to be transferred to the compartment to be cooled. Temperature probes in each of the compartments control the opening of the ducts and operation of the fans.

However, this arrangement has the disadvantage that individual temperature control of each of the compartments is not possible, only the compartment containing the refrigeration unit being able to be either heated or cooled. For example, if the compartment is being cooled then the other compartments can also only be cooled.

In order to overcome this problem, it has been suggested to provide the heat exchanger and fan in an air space which is located between and connects a suction chamber and a discharge chamber. Each space whose temperature is to be controlled is connected to the suction and discharge chambers by ducts which are provided in the roof and floor or walls of the compartments. To cool or heat a particular compartment the ducts between it and the suction and plenum chamber are opened and the fan operated. Air from the compartment is caused by the fan to move through the suction plenum chamber over the heat exchanger, by which it is heated or cooled, and back to the compartment via the discharge chamber. A temperature probe in the compartment senses when the desired temperature has been reached and causes the ducts to close at this point. More than one compartment may be heated or cooled simultaneously, providing, of course, that they require the same treatment. The arrangement therefore allows individual temperature control of all the compartments.

In all the arrangements described above and in the majority of other known temperature control systems for refrigerated vehicles and containers, ducting is required to pass hot or cold air from the refrigeration unit to the compartment or compartments and may also be employed to return air to the unit. In some arrangements the ducting is in the form of pipe work which is secured to the interior of the compartment. This is generally unsatisfactory since it reduces the capacity of the compartment. Alternatively the pipework may be passed through the walls etc. which form the compartments. This is an expensive arrangement since passageways must be provided for the pipework either by specially constructing the walls or by boring out of the walls, and then the pipework has to be fitted.

In known refrigerated vehicles the walls and/or floor and/or ceiling of the load carrying area are formed from composite panels either secured together or supported on a metal or wood framework. The panels comprise a layer of insulating material sandwiched between two skins formed from plywood or a metal or metal alloy. To form the panels, the layer of insulating material is secured to the two skins by adhesive and a vacuum is applied to one face of the panel to ensure a good bond between the layers. The bulkheads employed to divide the load carrying area into a number of compartments are also formed in the same way.

As an alternative to employing pipework, the ducts may be provided simply in the form of a passage extending through the panels which form the compartment and, if it is a multicompartmental vehicle or container, the dividing bulkheads. The passageways are produced by forming the panel from two layers of insulative material connected and spaced by spaced internal dividers, the spaces between the dividers providing the ducts. The layers of insulation are provided with a skin on the surface which will be on the exterior of the panel and adhesive is spread between all the component parts.

When a vacuum is applied to ensure good bonding between the parts, there is a tendency for the dividers to collapse. One solution which has been suggested is to provide internal packers but these have not been found to be successful since, in particular, they have to be the size of the duct and therefore are difficult to insert and remove, especially since the adhesive tends to seep out from between the insulative layers and the dividers and at least partially bond the packers to the surrounding insulative material.

In accordance with the invention, a method of forming a panel for use in a refrigerated vehicle or container with at least one duct extending therethrough comprises securing two sheets of insulative material to at least two spaced dividers such that the dividers connect and space the sheets, positioning a tube of flexible material between each adjacent pair of dividers, venting the interior of the tube to atmospheric pressure, covering the assembly with a blanket and applying a vacuum below the blanket.

When the vacuum is applied, the tube(s) of flexible material, preferably rubber, which are vented to atmospheric pressure, expand and fill the space between the dividers and the sheets of insulating material and prevent collapse of the sheets or of the dividers. The method therefore ensures good bonding of the constituent parts without collapse of the panel.

The method allows ducted panels to be produced on the some equipment and with similar steps to known single layer panels. It is less expensive than known methods for providing ducting which does not intrude into the load-carrying space.

The panels so formed can be employed as part of the roof, floor or walls of a insulated vehicle body and can also be used to form bulkheads for separating a load-carrying space into a number of compartments.

The panels may be formed with several ducts by increasing the number of inserts. Further it is possible to produce any desired duct path by simply changing the dimensions and positions of the inserts.

Preferably the tubes are coated with adhesive before being positioned between the dividers. When the vacuum is applied the tubes become bonded within the panel and serve as a lining for the ducts.

The dividers are suitably formed form insulating material. It has been found that with this method neither the sheets or the dividers, which are preferably made from foamed insulative material which is relatively weak, collapse when the vacuum is applied. The two sheets preferably have a skin on the side which will form part of the exterior surface of the panel. The dividers may also be provided with skins on any surface which will be exposed when the panel is in use in the refrigerated vehicle or container. The skin may be formed from a metal, metal alloy or plywood and can itself be coated with a reinforced plastics material.

The invention will now be further described by way of example with reference to the accompanying drawings in which:

Figure 1 is a schematic view illustrating a method of forming a panel for a refrigerated vehicle or container in accordance with the invention;

Figure 2 is a section through a panel formed by the method illustrated in Figure 1;

Figure 3 illustrates a method of making a tube for use in the method illustrated in Figure 1 and

Figure 4 illustrates a schematic view of a refrigerated vehicle incorporating panels formed by the method illustrated in Figure 1.

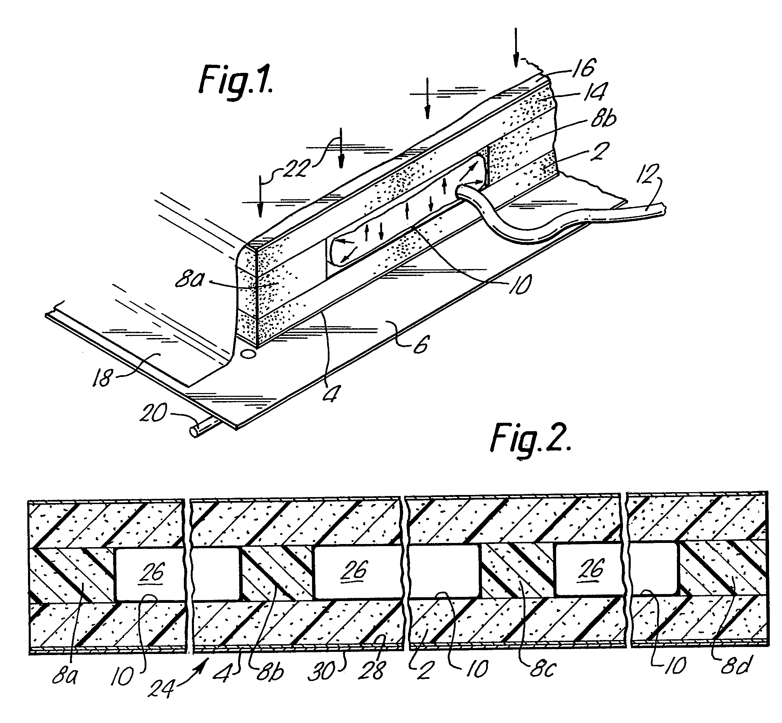

Figure 1 illustrates a method for forming a ducted panel, in which a sheet 2 of insulating material which may be formed from, for example, polyvinyl chloride, polyurethane or styrofoam with a skin, 4, of metal, metal alloy or plywood which may be coated and secured to one side with adhesive, is placed on a vacuum table 6 skin side down. Dividers 8a and b, also formed from insulating material, are secured to the sheet 2, also with adhesive, parallel to and spaced from each other.

An air bag 10 formed from flexible material, preferably rubber, is coated with adhesive and inserted between the dividers 8a and b. The bag 10 is vented to atmospheric pressure via a pipe 12. A second sheet 14 with a skin 16 is secured, skin side uppermost, to the dividers 8a, 8b with adhesive. A blanket 18 formed form rubber is placed over the assembled parts and a vacuum applied below the blanket via a pipe 20 connected to a vacuum pump (not shown). The bag 10 whose interior is vented to atmospheric pressure expands to fill the space between the dividers 8a and 8b and the sheets 2 and 14, due to the pressure differential and thereby prevents collapse of the dividers 8a and 8b. The application of the vacuum below the blanket 18, the upper surface of which is under atmospheric pressure, see arrows 22, ensure good bonding between the parts.

The coating of adhesive prior to insertion between the dividers causes the bag 10 to bond in place and form the lining of the duct produced when the vacuum is applied.

Panels may be formed with more than one duct by employing more dividers 8 and air bags 10. The panel 24 shown in Figure 2 is formed from two sheets, 2 and 14, and four dividers 8a, b, c and d to produce three ducts 26. Each of the ducts 26 is lined by the air bag 10 employed in its formation. As illustrated the skin 4 comprises a layer of plywood 28 and a layer of plastic coating 30 whilst the skin 16 comprises a layer of reinforced pastics material. The skins may alternatively be formed from a metal or a metal alloy and can be coated with a plastics material.

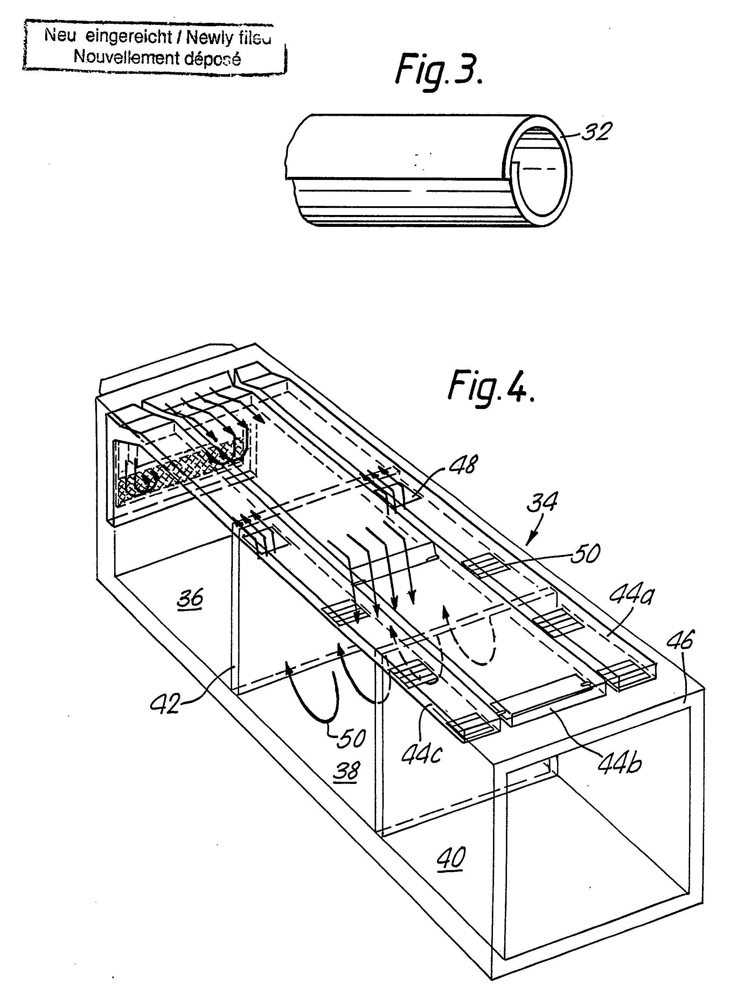

Rather than employing an air bag, a tube can be used which may be formed in the way shown in Figure 3 by securing together the overlapped long ends of a sheet of flexible material 32. One end of the tube is closed and the other connected to atmospheric pressure before or after positiong the tube between the dividers.

The refrigerated vehicle 34 shown in Figure 4 is constructed from panels of insulative material. The body is divided into three compartments 36, 38, 40 by bulkheads 42, also formed from panels of insulative material. Three ducts, 44a, b, c, extend through the roof of the vehicle 34 from the front end thereof. The ducts 44a, b and c are provided by forming three panels 46 with three ducts therein and connecting the panels 46 end to end. Apertures 48 in the panels 46 connect the ducts to each of the compartments 36, 38, 40 and the passage of air through them is controlled by flaps 50 positioned in the apertures 48. Air is passed from a heat exchanger unit (not shown) positioned behind the front wall of the vehicle along the central duct 44b and into the compartment whose temperature is to be controlled, in this case compartment 38. The air circulates through the compartment 38 (see arrows 50) and is returned to the heat exchanger via the ducts 44a and 44c.

To provide the apertures 48, the lower layers of insulative material from which the roof panels 46 are made are formed with cut-outs in the appropriate positions.

The ducts do not have to be provided in straight paths as shown, but rather, by suitably dimensioning and positioning of the dividers, curved or angled ducts can be produced.

The method of construction allows a suitably insulated panel to be formed with internal ducts without the collapse of the dividers which are themselves formed from weak insulating material. The method allows any desired number of ducts to be produced, of any desired shape and direction. It is inexpensive and requires only apparatus which is already employed in the production of single layer panels.

## Claims

1. A method of forming a panel for use in a refrigerated vehicle or container with at least one duct extending therethrough, comprising securing two sheets of insulative material to at least two spaced dividers such that the dividers connect and space the sheets, positioning a tube of flexible material between each adjacent pair of dividers, venting the interior of the tube(s) to atmospheric pressure, supporting the assembly on a vacuum table, covering the assembly with a blanket and applying a vacuum below the blanket.

2. A method as claimed in Claim 1 further comprising coating the tube(s) with adhesive before positioning them between the dividers.

3. A method as claimed in either Claim 1 or Claim 2 wherein the tube is in the form of an air bag, the method comprising securing an open ended pipe to the bag such that one end is in communication with the interior of the bag and the other is open to the atmosphere.

4. A method as claimed in any preceding Claim comprising affixing a skin to the sheets on the outer faces thereof.

5. A method as claimed in any preceding Claim comprising forming at least one cut-out in one of the sheets in a position to allow passage of liquid or fluid from the duct(s) to the exterior of the panel.

6. A method as claimed in any preceding Claim comprising shaping the dividers so that the space therebetween is curved or angled.

7. A panel formed by a method as claimed in any preceding Claim wherein the dividers comprise strips formed from insulative material.

8. A panel as claimed in Claim 7 wherein the tube(s) are formed from rubber.

9. A panel as claimed in either Claim 7 or Claim 8 wherein the insulative material is polystyrene, polyurethane or polyvinylchloride.

26. 10. 89

*Fig.1.*

*Fig.2.*

## Fig.3.

## Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 012 848 (METZELER SCHAUM GmbH)<br>* Page 2, line 36 - page 3, line 22; figure 1 * | 1 | E 04 C 2/26<br>B 29 C 65/48<br>B 29 C 65/02<br>B 29 C 49/24<br>B 29 C 51/16 |
| A | DE-A-3 509 634 (PRINS)<br>* Page 4, lines 3-18; figure 2 * | 1 | |
| A | EP-A-0 227 202 (LEAR SIEGLER INC.)<br>* Abstract; figure 6 * | 1 | |
| A | DE-B-1 182 967 (ING. HANS DUNKER APPARATEBAU)<br>* Claim; figure * | 1,7 | |

TECHNICAL FIELDS
SEARCHED (Int. Cl.5)

E 04 C
B 60 P
B 29 C
B 29 D

The present search report has been drawn up for all claims

| Place of search | Date of completion of the search | Examiner |
|---|---|---|
| THE HAGUE | 02-01-1990 | DE COENE P.J.S. |